Europäisches Patentamt

European Patent Office

Office européen des brevets

(19)

(11) Veröffentlichungsnummer: **0 036 175**
**B1**

(12) **EUROPÄISCHE PATENTSCHRIFT**

(45) Veröffentlichungstag der Patentschrift:
14.03.84

(51) Int. Cl.³: **C 12 G 3/08**

(21) Anmeldenummer: **81101782.1**

(22) Anmeldetag: **11.03.81**

(54) Verfahren zur Alkoholreduzierung vergorener Getränke durch Dialyse.

(30) Priorität: **14.03.80 DE 3009828**
 **14.03.80 DE 3009829**

(43) Veröffentlichungstag der Anmeldung:
 **23.09.81 Patentblatt 81/38**

(45) Bekanntmachung des Hinweises auf die Patenterteilung:
 **14.03.84 Patentblatt 84/11**

(84) Benannte Vertragsstaaten:
 **AT BE FR GB IT NL**

(56) Entgegenhaltungen:
 **EP - A - 0 021 247**
 **EP - A - 0 028 768**
 **DE - B - 2 243 800**
 **FR - A - 1 585 376**
 **FR - A - 2 333 546**
 **GB - A - 1 079 517**
 **GB - A - 1 177 126**
 **US - A - 2 122 761**

 **CHEMICAL ABSTRACTS, Band 92, no. 5, Februar 1980, Seite 613, Zusammenfassung 39816v Columbus, Ohio, USA**

(73) Patentinhaber: **Akzo GmbH,
Postfach 10 01 49 Kasinostrasse 19-23,
D-5600 Wuppertal-1 (DE)**

(72) Erfinder: **Tilgner, Hans-Georg Dr. Dipl.-Chem., Lübecker Strasse 28, D-4330 Mülheim/Ruhr (DE)**
Erfinder: **Schmitz, Franz-Josef, Dr. Dipl.-Chem., Am Stadtwald 28, D-8765 Erlenbach am Main (DE)**

## Verfahren zur Alkoholreduzierung vergorener Getränke durch Dialyse

Die Erfindung betrifft die Herstellung von vergorenen Getränken, mit reduziertem Alkoholgehalt, wobei ein nach einem üblichen Gärverfahren hergestelltes vergorenes Getränk bei einem Differenzdruck von weniger als 0,5 bar an einer Dialysemembran entlang geleitet wird, während gleichzeitig entlang der anderen Seite der Dialysemembran eine Dialysatflüssigkeit strömt und die Dialysatflüssigkeit Extraktstoffe enthält.

Aus verschiedenen Gründen wird seit Jahren versucht, vergorene Getränke, wie Bier, Wein, Sekt und dergleichen mit reduziertem Alkoholgehalt herzustellen. Einer der Gründe ist die Höchstgrenze für den Blutalkoholgehalt bei Kraftfahrern, der die Herstellung eines Getränkes mit reduziertem Alkoholgehalt wünschenswert erscheinen läßt. Ein anderer wichtiger Grund ist der, daß für die Diabetiker zwar voll ausgegorene Getränke normal zur Verfügung stehen, die jedoch wegen des gegenüber normal vergorenen Getränken höheren Alkoholgehalts für die Diabetiker nicht unbedenklich sind.

So werden z. B. Biere mit reduziertem Alkoholgehalt auf zwei prinzipiell unterschiedlichen Wegen hergestellt, und zwar durch die Wahl des Herstellungsverfahrens oder durch nachträgliche Behandlung eines auf üblichem Wege hergestellten Vollbieres. Diese Verfahren hatten bisher Nachteile, insbesondere in Bezug auf den Geschmack.

Bei der nachträglichen Behandlung normal vergorener Biere wird der Alkohol in gewünschter Menge dem fertigen Bier durch

— Destillation unter Atmosphärendruck,
— Vakuumdestillation oder
— Umkehrosmone

entzogen.

Darüber hinaus wurden noch die selektive Abtrennung von Alkohol mit Adsorberharzen und Gefriermethoden vorgeschlagen.

Prinzipiell wurden bisher auch bei den Versuchen, andere vorgorene Getränke, wie Wein, Obstwein oder Sekt mit reduziertem Alkoholgehalt herzustellen, analoge Verfahren angewendet, wie sie vor allem für das Bier bekannt geworden sind.

Der Erfindung am nächsten kommt die Abtrennung des Alkohols durch Umkehrosmose. Beschrieben sind derartige Umkehrosmoseverfahren in der DE-OS 2 135 938, der DE-OS 2 243 800, der DE-OS 2 323 094, weiterhin in den DE-OS 2 409 609 und 2 415 917.

Während die Destillation unter Atmosphärendruck durch Denaturierung der Eiweißstoffe, Erhöhung des Gehaltes an Abbauprodukten und einer ganzen Reihe von im Detail nicht genau bekannten Umsetzungen diverser Inhaltsstoffe bei der erhöhten Temperatur zu einem im Geschmack stark veränderten Produkt führt, kann man diese Erscheinung bei Anwendung einer Vakuumdestillation vermindern. Bei manchen vergorenen Getränken besteht die Gefahr, daß durch die — wenn auch geringere — Temperaturerhöhung immer noch eine nachteilige Veränderung der Inhaltsstoffe erfolgen kann. Die niedermolekularen Abbauprodukte greifen in einem solchen Falle in den Dialysevorgang ein und diffundieren auch von der Dialysatflüssigkeit in das Produkt, so daß dieses dadurch im Geschmack beeinträchtigt werden kann.

In der DE-AS 2 924 283 = EP 21 247 wird nun ein Verfahren beschrieben, den Alkoholgehalt in einem nach einem üblichen Verfahren hergestellten vergorenen Getränk, wie Bier, Wein, Sekt und dergleichen in gewünschtem Ausmaß zu reduzieren, ohne daß der Geschmack des Getränkes besonders beeinträchtigt wird. Dabei wird das vergorene Getränk bei einem Differenzdruck von weniger als 0,5 bar an einer Dialysemembran entlang geleitet, während gleichzeitig entlang der anderen Seite der Dialysemembran eine Dialysatflüssigkeit strömt. Unter Differenzdruck wird der Druckunterschied, der zwischen beiden Seiten der Membran besteht, verstanden. — Ein Problem blieb dabei allerdings die sinnvolle Weiterbildung der Dialysatflüssigkeit.

Aufgabe der vorliegenden Erfindung war ein verbessertes Verfahren, bei dem die Extraktstoffe in der Dialysatflüssigkeit die Wirtschaftlichkeit des Verfahrens und/oder die Qualität der gewonnenen alkoholverminderten Getränke günstig beeinflussen.

Diese Aufgabe wird erfindungsgemäß gelöst durch ein Verfahren, bei dem ein nach einem üblichen Gärverfahren hergestelltes vergorenes Getränk bei einem Differenzdruck von weniger als 0,5 bar an einer Dialysemembran entlang geleitet wird, während gleichzeitig entlang der anderen Seite der Dialysemembran eine Dialysatflüssigkeit strömt und die Dialysatflüssigkeit Extraktstoffe enthält, dadurch gekennzeichnet, daß die Dialysatflüssigkeit alkoholfreie Fruchtgetränke eingesetzt werden.

Unter einem alkoholfreien Fruchtgetränk im Sinne der Erfindung sollen alkoholfreie Getränke verstanden werden, die neben Wasser pflanzliche Geschmacksstoffe enthalten.

Auch Gemüsesäfte und Colagetränke sollen als alkoholfreie Fruchtgetränke im Sinne der Erfindung verstanden werden.

Vorzugsweise werden ungesüßte alkoholfreie Fruchtgetränke als Dialysatflüssigkeit eingesetzt. Sollte ein nachträglicher Zucker- und/oder Süßstoffzusatz erforderlich sein, so erfolgt er im Anschluß

# 0 036 175

an die Dialyse.

Soll ein kohlendioxidhaltiges vergorenes Getränk dialysiert werden, so hat es sich als besonders zweckmäßig erwiesen, als Dialysatflüssigkeit ein kohlendioxidhaltiges alkoholfreies Fruchtgetränk einzusetzen. Dadurch wird einerseits der Übertritt von Kohlendioxid durch die Membran verhindert, andererseits ist die die Dialyse verlassende Dialysatflüssigkeit bereits ein fertiges kohlendioxidhaltiges Getränk mit geringem Alkoholgehalt, welches ohne weitere Bearbeitung abgefüllt werden kann. Lediglich der Systemdruck muß so groß sein, daß ein Entweichen des Kohlendioxids verhindert wird.

Die Vorteile des erfindungsgemäßen Verfahrens liegen also darin, daß bei der Dialyse von vergorenen Getränken die Dialysatflüssigkeit in sinnvoller Weise als handelsfähiges fertiges Getränk neben dem dialysierten vergorenen Getränk Verwendung findet.

Zur Erzielung erfrischender Getränke mit weniger Alkohol kann das Verhältnis Dialysat zu vergorenem Getränk und/oder die Durchflußgeschwindigkeit beider Seiten erhöht werden.

Das nach der Dialyse anfallende Dialysat ist durch die eindiffundierten Stoffe, wie Alkohol und Extraktstoffe des vergorenen Getränkes in seinem Geschmack in besonderer Weise beeinflußt. Ebenso läßt sich durch die Extraktstoffe des alkoholfreien Getränkes auf der Dialysatseite der Geschmack des vergorenen Getränkes in besonderer Weise beeinflussen, und zwar durch die niedrigmolekularen Anteile, wodurch etwas anderes entsteht als beim Mischen zweier Getränke.

Wird beispielsweise als vergorenes Getränk Bier und als Dialysatflüssigkeit ein ungesüßter Zitronensaft der Dialyse unterworfen, so erhält das Bier einen leicht sauren Zitronengeschmack, wie er beispielsweise bei Weizenbier erwünscht ist und das Dialysat enthält neben einem geringeren Alkoholgehalt von wahlweise bis zu etwa 1,5 Gew.-% Bierextraktstoffe, die durch die Bitterstoffe dem nunmehr schwach alkoholhaltigen Fruchtsaftgetränk eine besondere, bisher nicht gekannte, pikante Geschmacksnote verleihen.

Ein anderes Beispiel ist die Verwendung von Himbeergetränk als Dialysatflüssigkeit und Bier als vergorenes Getränk. Hier ergeben sich neben der Alkoholreduzierung bzw. Alkoholanreicherung Geschmacksnuancen, die an die sogenannte »Berliner Weiße« erinnern.

Aufgrund der Vielfalt an Kombinationsmöglichkeiten lassen sich eine Vielzahl von interessanten Getränken mit geringem Alkoholgehalt herstellen, für die nur ein relativ geringer technischer Aufwand notwendig ist und die praktisch keinen unverwertbaren oder wertlosen Abfall hervorrufen oder zusätzliche Bearbeitung notwendig werden lassen.

Durch das erfindungsgemäße Verfahren ergeben sich nicht nur Verwendungsmöglichkeiten für die Dialysatflüssigkeit, sondern darüber hinaus auch die Möglichkeit die Prozeßvielfalt der Brauprozesse zu reduzieren, weil sich aus einer Grundbiersorte verschiedene Geschmacksrichtungen auf diesem Wege herstellen lassen.

Auch der Einsatz von Weinen, die aufgrund minderer Qualitäten sich als Weine nicht verkaufen lassen und heute nur für die Brennerei oder Essigherstellung infrage kommen, ist zur Herstellung alkoholarmer Erfrischungsgetränke mit Hilfe des erfindungsgemäßen Verfahrens möglich geworden.

Es wurde festgestellt, daß, wenn die Dialysierflüssigkeit in den Dialysierprozeß zurückgeführt wird, die Hauptmenge der Inhaltsstoffe vergorener Getränke, die bei der Vakuumdestillation zu unerwünschten Nebenprodukten führen können, bei der Dialyse zurückgehalten werden.

Anhand des nachfolgenden Beispiels der Dialyse von Grundwein kann nämlich gezeigt werden, daß nur der Alkohol und ein Teil der Extraktstoffe, dabei besonders nur die niedermolekularen Extraktstoffe, in das Dialysat übergehen. Bei der Wiederverwendung des Dialysates nach Entfernung des Alkohols ändert sich bereits nach wenigen Durchgängen die Zusammensetzung der Dialysatflüssigkeit praktisch nicht mehr und sie enthält bereits alle die Stoffe in ausreichender Konzentration, für die eine Gefahr des Absinkens der Konzentration im Produkt befürchtet werden muß.

Zur Dialyse wurde ein Dialysator mit einem Bündel Cellulosehohlfäden, die aus Kupferammoniumcelluloselösungen ersponnen waren, als Membrane eingesetzt. Entsprechende Dialysehohlfadenmembraneinheiten sind von der Hämodialyse gut bekannt. Dialysemembranen aus anderen Polymeren eignen sich in gleicher Weise für das erfindungsgemäße Verfahren.

Die Austauschfläche der Hohlfadenmembraneinheit betrug 1,3 m². Selbstverständlich lassen sich auch Flachfolien oder Folienschlauchmembranen für das erfindungsgemäße Verfahren verwenden. Bei einer Temperatur von 10°C und einem Differenzdruck (Transmembrandruck) von 0,0−0,15 bar wurde durch die Hohlfäden ein Grundwein für die Sektherstellung mit einer Geschwindigkeit von 30 l/h · m² geleitet, während an der Außenseite der Hohlfäden 11,5 l/h² Wasser als Dialysatflüssigkeit gleicher Temperatur vorbeigeleitet wurde.

Nach dem Durchlauf durch den Dialysator wurde die Dialysatflüssigkeit einer Vakuumdestillation unterworfen und anschließend, nachdem die bei der Destillation auftretende Volumenabnahme (Alkohole und Wasser) durch Zugabe von Wasser wieder ausgeglichen war, erneut im Kreislauf als Dialysatflüssigkeit der Dialyse zugeführt. Nach dem Durchlauf als Dialysatflüssigkeit wurde wieder der Alkohol durch Vakuumdestillation entfernt, das Volumen aufgefüllt und erneut als Dialysatflüssigkeit eingesetzt.

Die Änderung in den Konzentrationen sind in den folgenden Tabellen 1 und 2 zusammengestellt.

3

Tabelle 1

Konzentrationsänderung beim Wein bei der Dialyse

| Zahl der Durchgänge | Alkohol g/l | | Extrakt g/l | | Säure g/l | |
|---|---|---|---|---|---|---|
| | Zulauf | Ablauf | Zulauf | Ablauf | Zulauf | Ablauf |
| 1 | 81,8 | 56,9 | 21,2 | 15,7 | 8,2 | 6,03 |
| 2 | 81,8 | 60,1 | 21,2 | 18,8 | 8,2 | 7,29 |
| 3 | 81,8 | 58,1 | 21,2 | 20,1 | 8,2 | 7,74 |
| 4 | 81,8 | 55,8 | 21,2 | 20,5 | 8,2 | 8,04 |

Tabelle 2

Konzentrationsänderungen bei der Dialysatflüssigkeit bei der Dialyse von Wein

| Zahl der Durchgänge | Alkohol g/l | | Extrakt g/l | | Säure g/l | |
|---|---|---|---|---|---|---|
| | Zulauf | Ablauf | Zulauf | Ablauf | Zulauf | Ablauf |
| 1 | 0 | 58,1 | 0 | 11,6 | 0 | 4,4 |
| 2 | 9,6*) | 63,5 | 11,6 | 17,5 | 4,7 | 6,8 |
| 3 | 6,0*) | 58,7 | 17,5 | 20,3 | 6,6 | 7,8 |
| 4 | 1,6*) | 53,4 | 20,3 | 21,2 | 7,8 | 8,3 |

*) Restalkoholgehalt nach der Vakuumdestillation (Unterschiedliche Werte ergaben sich durch unterschiedliche Destillationsbedingungen).

Die Tabellen zeigen, daß bereits nach 4 Durchgängen sich die Konzentration im Extraktgehalt und im Säuregehalt (berechnet als Weinsäure) nicht mehr ändert, so daß die Dialyse sich ab diesem Durchgang praktisch nur noch auf Alkohol erstreckt. Der bei der Verwendung von Grundwein, aus dem der Alkohol durch Destillation abgetrennt war, als Dialysatflüssigkeit mögliche unerwünschte Beigeschmack beim dialysierten Wein durch Abbauprodukte im Dialysatkreislauf trat beim erfindungsgemäßen Verfahren auch nach einer relativ großen Zahl von Durchgängen nicht auf. Es wird angenommen, daß die Stoffe, deren Abbauprodukte zu den Geschmacksbeeinträchtigungen führen, von der Dialysemembran nicht zurückgehalten werden, während für die Abbauprodukte selbst jedoch die Dialysemembran undurchlässig ist.

Für die Sektkellerei ist diese Ausführungsform des erfindungsgemäßen Verfahrens deshalb von besonderem Interesse, weil der dialysierte Alkohol, der für den Preis des Grundweines maßgeblich ist, in vollem Umfange gewonnen und wirtschaftlich verwendet werden kann.

**Patentansprüche**

1. Verfahren zur Herstellung von vergorenen Getränken mit reduziertem Alkoholgehalt, wobei ein nach einem üblichen Gärverfahren hergestelltes vergorenes Getränk bei einem Differenzdruck von weniger als 0,5 bar an einer Dialysemembran entlang geleitet wird, während gleichzeitig entlang der anderen Seite der Dialysemembran eine Dialysatflüssigkeit strömt, und die Dialysatflüssigkeit Extraktstoffe enthält, dadurch gekennzeichnet, daß das Dialysatflüssigkeit alkoholfreie Fruchtgetränke eingesetzt werden.

2. Verfahren nach Anspruch 1, dadurch gekennzeichnet, daß ungesüßte, alkoholfreie Fruchtgetränke als Dialysatflüssigkeit eingesetzt werden.

3. Verfahren nach den Ansprüchen 1 und 2, dadurch gekennzeichnet, daß ein kohlendioxidhaltiges alkoholfreies Fruchtgetränk als Dialysatflüssigkeit eingesetzt wird.

**Claims**

1. A process for the production of fermented drinks having a reduced alcohol content, in which a fermented drink produced according to a conventional fermentation process is passed along a dialyses membrane at a differential pressure of less than 0.5 bar, while at the same time a dialysate liquid flows along the other side of the dialysis membrane, and the dialysate liquid contains extractive substances, characterised in that alcohol-free fruit drinks are used as dialysate liquid.

2. A process according to claim 1, characterised in that unsweetened, alcohol-free fruit drinks are used as dialysate liquid.

3. A process according to claims 1 and 2, characterised in that an alcohol-free fruit drink containing carbon dioxide is used as dialysate liquid.

**Revendications**

1. Procédé de préparation de boissons fermentées à teneur en alcool réduite, dans lequel une boisson fermentée préparée selon un procédé usuel de fermentation avec une pression différentielle inférieure à 0.5 bar est conduite le long d'une membrane de dialyse pendant que simultanément circule un liquide de dialysat le long de l'autre côté de la membrane de dialyse, et le liquide de dialysat contient des matières extraites, caractérisé par le fait que des boissons de fruits sans alcool sont utilisées comme liquide de dialysat.

2. Procédé selon la revendication 1, caractérisé par le fait que des boissons de fruits sans alcool, non sucrées, sont utilisées comme liquide de dialysat.

3. Procédé selon les revendications 1 et 2, caractérisé par le fait qu'une boisson de fruits sans alcool, chargée de gaz carbonique, est utilisée comme liquide de dialysat.